(19) **Europäisches Patentamt**
European Patent Office
Office européen des brevets

(11) **EP 3 914 963 B1**

(12) **EUROPÄISCHE PATENTSCHRIFT**

(45) Veröffentlichungstag und Bekanntmachung des Hinweises auf die Patenterteilung:
**09.11.2022 Patentblatt 2022/45**

(21) Anmeldenummer: **20700369.0**

(22) Anmeldetag: **09.01.2020**

(51) Internationale Patentklassifikation (IPC):
**G03B 5/00** *(2021.01)* **G03B 15/07** *(2021.01)*

(52) Gemeinsame Patentklassifikation (CPC):
**G03B 5/00; G03B 15/07**

(86) Internationale Anmeldenummer:
**PCT/EP2020/050414**

(87) Internationale Veröffentlichungsnummer:
**WO 2020/151955 (30.07.2020 Gazette 2020/31)**

(54) **BÜHNENTECHNISCHE VORRICHTUNG UND VERFAHREN ZUR BESTIMMUNG EINER KORRELATIONSFUNKTION**

STAGE DEVICE AND METHOD FOR DETERMINING A CORRELATION FUNCTION

DISPOSITIF DE TECHNIQUE DE SCÈNE ET PROCÉDÉ POUR DÉTERMINER UNE FONCTION DE CORRÉLATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.01.2019 AT 500552019**

(43) Veröffentlichungstag der Anmeldung:
**01.12.2021 Patentblatt 2021/48**

(73) Patentinhaber: **zactrack GmbH**
**1020 Wien (AT)**

(72) Erfinder: **PETRICEK, Werner**
**3400 Kierling (AT)**

(74) Vertreter: **Puchberger & Partner Patentanwälte**
**Reichsratsstraße 13**
**1010 Wien (AT)**

(56) Entgegenhaltungen:
**US-A1- 2016 323 504    US-A1- 2018 292 809**
**US-B1- 8 300 219**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine bühnentechnische Vorrichtung umfassend ein Befestigungselement, ein Lagerelement, und ein Funktionselement, insbesondere eine Kamera oder einen Scheinwerfer, wobei das Funktionselement am Lagerelement um eine Tilt-Achse schwenkbar angeordnet ist und das Lagerelement am Befestigungselement um eine Pan-Achse drehbar angeordnet ist.

In der Bühnen- und Veranstaltungstechnik werden Dreh- und Schwenkelemente dazu verwendet, um die Position von Funktionselementen, wie beispielsweise Kameras oder Scheinwerfer, manipulieren zu können. Beispielsweise ist es im Stand der Technik bekannt, einen Scheinwerfer als Funktionselement in dreh- und schwenkbarer Weise derart anzuordnen, dass dieser auf im Wesentlichen beliebige Punkte in einem Raum, beispielsweise auf einer Bühne, gerichtet werden kann. Üblicherweise wird dies durch die schwenkbare Befestigung des Funktionselements an einem Lagerelement, und die drehbare Befestigung des Lagerelements an einem Befestigungselement ermöglicht. Eine derartige Konstruktion ist beispielsweise aus der US 8 300 219 B1 bekannt.

Im Stand der Technik ist es üblich, die Drehachse als Pan-Achse und die Schwenkachse als Tilt-Achse zu bezeichnen, wobei die Pan-Achse und die Tilt-Achse insbesondere orthogonal zueinander verlaufen können.

Der Antrieb erfolgt üblicherweise unter Verwendung von Schrittmotoren, wobei die einzelnen Schritte als Ticks bezeichnet werden. Um die Position des Funktionselements möglichst präzise einstellen zu können, ist es notwendig, zu wissen, wie sich die Motorbewegung in Pan-Ticks bzw. Tilt-Ticks auf die tatsächliche Bewegung und Ausrichtung des Funktionselements auswirkt.

Es muss also jene Korrelationsfunktion bzw. Abbildungsvorschrift ermittelt werden, die den Zusammenhang zwischen der Motor-Ansteuerung und der tatsächlichen Positionierung des Funktionselements beschreibt. Dieser Zusammenhang wird regelmäßig rein empirisch bestimmt und variiert je nach Aufstellung einer bühnentechnischen Vorrichtung, was zu Ungenauigkeiten in der Ausrichtung des Funktionselements führen kann. Um diese Ungenauigkeiten zu beheben, ist bei jeder Standortänderung der bühnentechnischen Vorrichtung eine Feinjustierung notwendig, was sehr arbeitsaufwändig sein kann.

Es ist somit eine Aufgabe der Erfindung, die Nachteile des Standes der Technik zu überwinden und eine Vorrichtung und ein Verfahren zu schaffen, durch welche der Zusammenhang zwischen Motor-Ansteuerung und der tatsächlichen Positionierung des Funktionselements zuverlässig bestimmt werden kann.

Die Aufgabe der Erfindung wird durch eine Vorrichtung und ein Verfahren mit den Merkmalen der unabhängigen Patentansprüche gelöst.

Die Erfindung betrifft eine dreh- und schwenkbare bühnentechnische Vorrichtung, umfassend ein Befestigungselement, ein Lagerelement, und ein Funktionselement, wobei das Funktionselement am Lagerelement um eine Tilt-Achse schwenkbar angeordnet ist und das Lagerelement am Befestigungselement um eine Pan-Achse drehbar angeordnet. Beim Funktionselement kann es sich insbesondere um eine Kamera oder um einen Scheinwerfer handeln.

Die Begriffe "drehbar", "schwenkbar" und jegliche Abwandlungen hiervon können in Zusammenhang mit der vorliegenden Erfindung die Eigenschaft eines Elements bezeichnen, um eine im Wesentlichen ortsfeste Achse bewegbar zu sein. Insbesondere können die Pan-Achse und die Tilt-Achse orthogonal zueinander verlaufen.

Erfindungsgemäß ist die Positionsbestimmungsanordnung derart ausgeführt, dass eine Relativbewegung zwischen Lagerelement und Befestigungselement sowie zwischen Lagerelement und Funktionselement bestimmbar ist.

Das Lagerelement kann am Befestigungselement um wenigstens 360°, vorzugsweise um 540° um die Pan-Achse drehbar sein. Das Funktionselement kann am Lagerelement um wenigstens 90°, vorzugsweise um 180° um die Tilt-Achse schwenkbar sein. Dadurch kann das Funktionselement auf jeden beliebigen Punkt ausgerichtet werden, der sich an der Oberfläche einer Halbschale einer Kugel befindet.

Erfindungsgemäß kann die Positionsbestimmungsanordnung derart ausgeführt sein, dass ein Drehen oder Schwenken des Funktionselements bestimmbar ist. Insbesondere kann vorgesehen sein, dass das von einem Signalsendeelement ausgesandte Signal nur in einer bestimmten Position des Funktionselements durch ein Signalreflexionselement derart reflektiert wird, dass es auf das entsprechende Signalempfangselement trifft.

Erfindungsgemäß ist vorgesehen, dass die Positionsbestimmungsanordnung wenigstens zwei Signalsendeelemente, wenigstens zwei Signalreflexionselemente und wenigstens zwei Signalempfangselemente umfasst.

Gegebenenfalls kann vorgesehen sein, dass die Signalsendeelemente zur Aussendung von elektromagnetischer Strahlung, insbesondere von Infrarot-Strahlung, sichtbarer Lichtstrahlung oder UV-Strahlung ausgebildet sind. Gegebenenfalls kann das Signalsendeelement als Leuchtdiode ausgebildet sein. Gegebenenfalls kann das Signalsendeelement ein Laser sein. Das Signalsendeelement kann auch jedes Element oder jede Vorrichtung sein, die dazu geeignet ist, ein Signal auszusenden. Ein Signal kann insbesondere optischer Natur sein, also elektromagnetische Strahlung bevorzugt im ultravioletten, sichtbaren oder infraroten Bereich.

Ein erfindungsgemäßes Signalreflexionselement kann insbesondere derart ausgebildet sein, dass es das von einem Signalsendeelement ausgesandte Signal reflektieren kann. Ist das Signal ein optisches Signal, kann das Signalreflexionselement ein Spiegel sein.

Ein erfindungsgemäßes Signalempfangselement kann derart ausgebildet sein, dass es eintreffende Signale, insbesondere vom Signalsendeelement stammende Signale, detektieren kann. Ist das Signal ein optisches Signal, kann das Signalempfangselement beispielsweise eine Photodiode sein.

Gegebenenfalls kann vorgesehen sein, dass die Signalsendeelemente derart angeordnet sind, dass die von den Signalsendeelementen ausgesendeten Signale zueinander im Wesentlichen orthogonale Ausbreitungsrichtungen aufweisen, die vorzugsweise in Richtung der Pan-Achse und der Tilt-Achse verlaufen.

Erfindungsgemäß ist vorgesehen, dass ein erstes Signalreflexionselement am Befestigungselement angeordnet ist. Erfindungsgemäß ist vorgesehen, dass ein zweites Signalreflexionselement und gegebenenfalls ein drittes Signalreflexionselement am Funktionselement angeordnet sind.

Je nach Dreh- und Schwenkbarkeit des Funktionselements kann es notwendig sein, eine entsprechende Anzahl an Signalreflexionselementen vorzusehen. Bevorzugt sind die Signalreflexionselemente am Gehäuse der bühnentechnischen Vorrichtung angeordnet.

Gegebenenfalls kann vorgesehen sein, dass eine Sende-Empfangs-Vorrichtung vorgesehen ist, wobei die Sende-Empfangs-Vorrichtung wenigstens zwei Signalsendeelemente und wenigstens zwei Signalempfangselemente umfasst. Bevorzugt können die Signalsendeelemente und die Signalempfangselemente in einer kombinierten Anordnung, insbesondere in einer Sende-Empfangs-Vorrichtung angeordnet sein. Dadurch kann eine feste Relativpositionierung der Elemente zueinander gewährleistet werden. Zusätzlich wird ein einfacher Einbau an einer bühnentechnischen Vorrichtung ermöglicht.

Gegebenenfalls kann vorgesehen sein, dass die Sende-Empfangs-Vorrichtung am Lagerelement angeordnet ist. Die kombinierte Sende-Empfangs-Vorrichtung kann ein erstes Signalsendeelement und ein zugeordnetes erstes Signalempfangselement zur Zusammenwirkung mit einem ersten Signalreflexionselement am Befestigungselement umfassen. Die kombinierte Sende-Empfangs-Vorrichtung kann ferner ein zweites Signalsendeelement und ein zugeordnetes zweites Signalempfangselement zur Zusammenwirkung mit einem zweiten Signalreflexionselement am Funktionselement umfassen.

Gegebenenfalls kann vorgesehen sein, dass das Lagerelement gegenüber dem Befestigungselement ausschließlich in der Pan-Achse beweglich ist. Gegebenenfalls kann vorgesehen sein, dass das Funktionselement gegenüber dem Lagerelement ausschließlich in der Tilt-Achse beweglich ist.

Die Erfindung betrifft ferner ein Verfahren zur Bestimmung der Korrelationsfunktion vorgegebener Tilt- und Pan-Werte eines Funktionselements, insbesondere einer Kamera oder eines Scheinwerfers, auf absolute Bewegungswerte des Funktionselements unter Verwendung einer erfindungsgemäßen Vorrichtung. Das erfindungsgemäße Verfahren umfasst die Schritte:

a. Bewegen des Funktionselements in eine erste Stellung, wobei in der ersten Stellung das Signal wenigstens eines Signalsendeelements von wenigstens einem Signalreflexionselement auf wenigstens ein Signalempfangselement reflektiert wird,

b. Bewegen des Funktionselements durch Drehen um die Pan-Achse und/oder durch Schwenken um die Tilt-Achse in eine durch vorgegebene Tilt- und Pan-Werte definierte zweite Stellung, wobei in der zweiten Stellung das Signal wenigstens eines Signalsendeelements von wenigstens einem Signalreflexionselement auf wenigstens ein Signalempfangselement reflektiert wird,

c. Messen wenigstens eines absoluten Bewegungswertes des Funktionselements zwischen der ersten Stellung und der zweiten Stellung,

d. Bestimmen einer Korrelationsfunktion zwischen den vorgegebenen Tilt- und Pan-Werten des Funktionselements und dem tatsächlich gemessenen Bewegungswert des Funktionselements.

Bevorzugt ist der Weg bzw. der Winkel bekannt, der zwischen der ersten Stellung und der zweiten Stellung des Funktionselements liegt.

Gegebenenfalls kann vorgesehen sein, dass die erste Stellung der zweiten Stellung entspricht.

Gegebenenfalls kann vorgesehen sein, dass zur Bestimmung des absoluten Bewegungswertes der Pan-Achse eine Drehung des Funktionselements um die Pan-Achse, insbesondere um 360°, erfolgt.

Gegebenenfalls kann vorgesehen sein, dass zur Bestimmung des absoluten Bewegungswertes der Tilt-Achse eine Drehung des Funktionselements um die Tilt-Achse, insbesondere um 90°, erfolgt.

Weitere Merkmale der Erfindung ergeben sich aus den Patentansprüchen, den Figuren, sowie aus dem Ausführungsbeispiel.

Nachfolgend wird die Erfindung anhand eines exemplarischen Ausführungsbeispiels im Detail erläutert. Das Ausführungsbeispiel dient lediglich zur Illustration und soll den Umfang der Erfindung nicht einschränken.

Es zeigen:

Fig. 1 eine schematische perspektivische Ansicht eines Ausführungsbeispiels einer erfindungsgemäßen bühnentechnischen Vorrichtung;

Fig. 2 eine Ansicht der bühnentechnischen Vorrichtung gemäß dem Ausführungsbeispiel in Aufsicht;

Fig. 3 eine Ansicht der bühnentechnischen Vorrichtung gemäß dem Ausführungsbeispiel in seitlicher Ansicht;

Fig. 4 eine Detailansicht der Sende-Empfangs-Vorrichtung des Ausführungsbeispiels.

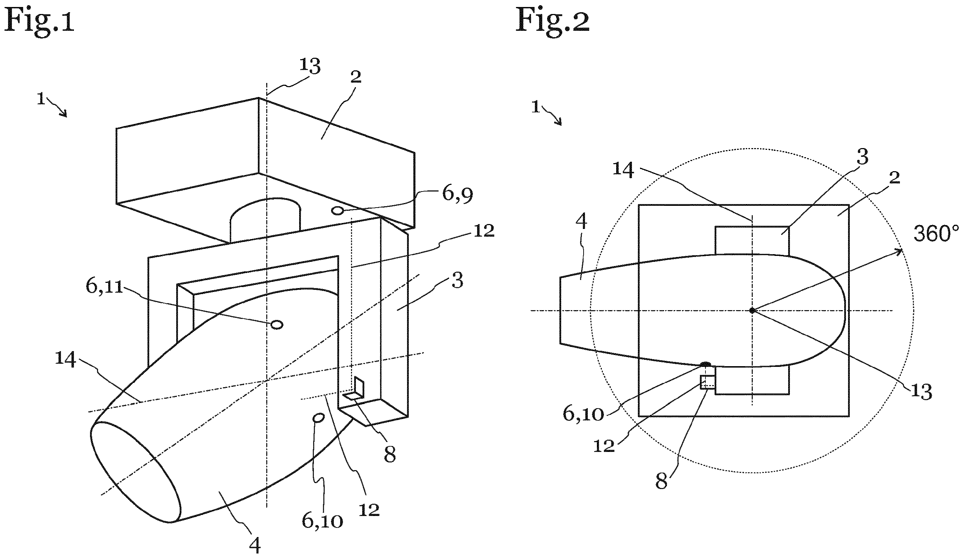

Fig. 1 zeigt eine schematische perspektivische Ansicht eines Ausführungsbeispiels einer erfindungsgemäßen bühnentechnischen Vorrichtung 1.

Die bühnentechnische Vorrichtung 1 umfasst ein Befestigungselement 2, ein Lagerelement 3, sowie ein Funktionselement 4, welches in diesem Ausführungsbeispiel als Scheinwerfer ausgebildet ist.

Das Befestigungselement 2 ist dazu ausgeführt, die bühnentechnische Vorrichtung 1 auf einer Oberfläche zu befestigen. In diesem Ausführungsbeispiel ist die Oberfläche die Decke eines Raumes, in dem die bühnentechnische Vorrichtung 1 verwendet wird. Alternativ kann das Befestigungselement 2 auch zur Befestigung der bühnentechnischen Vorrichtung 1 an anderen Flächen, wie beispielsweise an Wänden oder auf Böden verwendet werden. Dabei kann die Befestigung mit im Stand der Technik üblichen Mitteln erfolgen, beispielsweise mittels Schrauben oder Bolzen. Insbesondere bei Positionierung auf einem Boden kann das Befestigungselement 2 auch als Standfuß ausgebildet sein oder einen Standfuß aufweisen.

Am Befestigungselement 2 ist das Lagerelement 3 um die Pan-Achse 13 drehbar gelagert. Ist die bühnentechnische Vorrichtung 1 wie im beschriebenen Ausführungsbeispiel positioniert, weist die Pan-Achse 13 eine vertikale Ausrichtung auf. Das Lagerelement 3 ist um die Pan-Achse 13 um wenigstens 360° drehbar. Eine Drehbarkeit um mehr als 540° ist jedoch in der Regel nicht vorgesehen, um ein Verwickeln von Kabelverbindungen zu vermeiden.

Am Lagerelement 3 ist das Funktionselement 4 um die Tilt-Achse 14 schwenkbar gelagert. Ist die bühnentechnische Vorrichtung 1 wie im beschriebenen Ausführungsbeispiel positioniert, weist die Tilt-Achse 14 eine horizontale Ausrichtung auf. Das Funktionselement 4 ist um etwa 180° schwenkbar.

Durch Drehen um die Pan-Achse 13 und Schwenken um die Tilt-Achse 14 kann das Funktionselement 4 also auf einen beliebigen Punkt ausgerichtet werden, der auf der Oberfläche einer Halbkugelschale liegt. In Fig. 1 ist das Funktionselement 4 um etwa 45° zur Horizontalen verschwenkt.

Am Lagerelement 3 ist eine Sende-Empfangs-Vorrichtung 8 angeordnet, welche in diesem Ausführungsbeispiel zwei Signalsendeelemente 5 und zwei Signalempfangselemente 7 umfasst.

Die erfindungsgemäße Positionsbestimmungsanordnung umfasst neben dem Signalsendeelement 5 und dem Signalempfangselement 7 auch Signalreflexionselemente 6, wobei ein erstes Signalreflexionselement 9 am Befestigungselement 2 angeordnet ist, und wobei ein zweites Signalreflexionselement 10 und ein drittes Signalreflexionselement 11 am Funktionselement 4 angeordnet sind.

Die erfindungsgemäßen Signalreflexionselemente 6 sind in diesem Ausführungsbeispiel als Spiegel ausgeführt. Es versteht sich, dass die Signalreflexionselemente 6 derart angeordnet sind, um eine Reflexion des vom jeweiligen Signalsendeelement 5 ausgesendeten Signals auf das entsprechende Signalempfangselement 7 zu ermöglichen. In anderen, nicht gezeigten Ausführungsbeispielen können die Signalreflexionselemente 6 jedoch in beliebiger Weise ausgeführt sein, solange sie dazu geeignet sind, das Signal eines Signalsendeelements 5 in geeigneter Weise zu reflektieren.

Die Sende-Empfangs-Vorrichtung 8 sendet in diesem Beispiel ein Lichtsignal aus. Dieses breitet sich in den Ausbreitungsrichtungen 12 in Richtung Befestigungselement 2 und Funktionselement 4 aus. Weder das Befestigungselement 2 noch das Funktionselement 4 befindet sich in dieser Ansicht in einer Reflexionsstellung, also wird das Signal von keinem der Signalreflexionselemente 6 zur Sende-Empfangs-Vorrichtung 8 rückgestrahlt. Das Lichtsignal trifft also auf die Oberfläche der bühnentechnischen Vorrichtung 1.

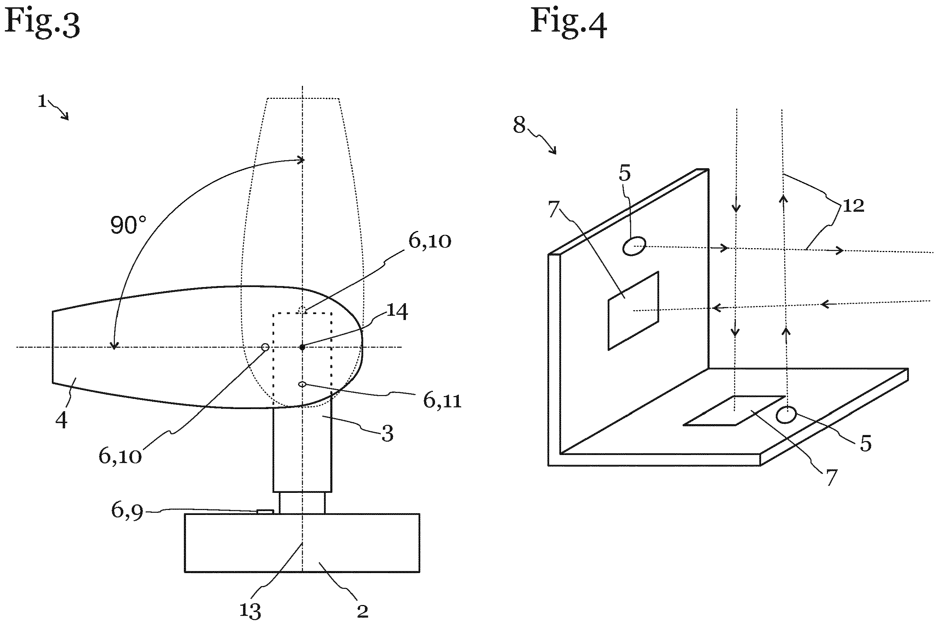

Fig. 2 zeigt eine Ansicht der bühnentechnischen Vorrichtung des Ausführungsbeispiels in Aufsicht und Fig. 3 zeigt eine Ansicht der bühnentechnischen Vorrichtung des Ausführungsbeispiels in seitlicher Ansicht, wobei das Funktionselement 4 jeweils horizontal positioniert ist. In Fig. 3 ist zusätzlich mit strichlierten Linien das Funktionselement 4 entlang der Tilt-Achse 14 um 90° zur Horizontalen verschwenkt dargestellt. In Fig. 3 ist zur verbesserten Ansicht der Arm des Lagerelements 3 strichliert dargestellt, um eine freie Ansicht der Oberfläche des Funktionselements 4 zu ermöglichen.

Fig. 2 zeigt zusätzlich das Befestigungselement 2 und das Lagerelement 3, sowie die Sende-Empfangs-Vorrichtung 8 und das erste Signalreflexionselement 9 und das zweite Signalreflexionselement 10. Das dritte Signalreflexionselement 11 ist in Fig. 2 nicht dargestellt.

In Fig. 3 ist die Sende-Empfangs-Vorrichtung 8 ist zur besseren Sichtbarkeit der auf der Oberfläche des Funktionselements 4 angeordneten Signalreflexionselemente 6 nicht dargestellt.

In Fig. 3 sind drei Signalreflexionselemente 6 gezeigt, wobei das erste Signalreflexionselement 9 am Befestigungselement 2 angeordnet ist und das zweite Signalreflexionselement 10 sowie das dritte Signalreflexionselement 11 am Funktionselement 4 angeordnet sind.

In der um 90° verschwenkten (strichliert dargestellten) Position ist das dritte Signalreflexionselement 11 nicht gezeigt, da sich dieses im Wesentlichen deckungsgleich mit dem zweiten Signalreflexionselement 10 in der unverschwenkten Position befindet.

Der Aufbau der Sende-Empfangsvorrichtung 8 ist in Fig. 4 im Detail gezeigt. Die Sende-Empfangs-Vorrichtung 8 umfasst zwei Signalsendeelemente 5 und zwei Signalempfangselemente 7, sowie ein L-förmiges Halteelement 15. An einem Schenkel des Halteelements 15 sind je ein Signalsendeelement 5 und ein Signalempfangselement 7 angeordnet.

Die Signalsendeelemente 5 sind in diesem Ausführungsbeispiel als Leuchtdioden ausgebildet, welche sichtbares Licht aussenden können. Die Signalempfangselemente 7 sind in diesem Ausführungsbeispiel als Photodioden ausgebildet, welche dazu ausgebildet sind, das ausgesandte Licht der Signalsendeelemente 5 zu detektieren. In diesem Ausführungsbeispiel verlaufen die Schenkel des Halteelements 15 im Wesentlichen orthogonal zueinander. Die Ausbreitungsrichtungen 12 der von den Signalsendeelementen 5 ausgesandten Signale verlaufen in diesem Ausführungsbeispiel im Wesentlichen orthogonal zueinander.

Signale die von den Signalsendeelementen 5 ausgesendet werden, verlaufen entlang der Ausbreitungsrichtungen 12. In Reflexionsstellungen werden die Signale von den Signalreflexionselementen 6 reflektiert und treffen auf die Signalempfangselemente 7, wie in Fig. 4 illustriert ist.

In der bestimmungsgemäßen Verwendung der bühnentechnischen Vorrichtung 1 wird diese zuerst an der gewünschten Stelle im Raum positioniert, woraufhin die Kalibration durchgeführt werden kann. Während der Kalibration wird die Korrelationsfunktion zwischen vorgegebenen Tilt- und Pan-Werten und dem tatsächlichen Bewegungswerts des Funktionselements 4 bestimmt. Es sind regelmäßig zwei Schrittmotoren vorgesehen, die unabhängig voneinander angesteuert werden können. Es ist üblich, die Anzahl der Motordrehungen jenes Motors, der die Drehung um die Pan-Achse 13 bewirkt, als Pan-Ticks und die Anzahl der Motordrehungen jenes Motors, der die Schwenkung um die Tilt-Achse 14 bewirkt, als Tilt-Ticks zu bezeichnen.

Die Korrelationsfunktion beschreibt den Zusammenhang zwischen den an den Schrittmotor gesendeten Ticks in der Tilt- und/oder Pan-Achse und der tatsächlichen Bewegung des Funktionselements 4. Dabei bewirkt die Motorbewegung eine Drehung um die Pan-Achse 13 und eine Schwenkung um die Tilt-Achse 14.

Zuerst wird das Lagerelement 3 in eine Stellung gebracht, in der das erste Signalreflexionselement 9 das durch eines der Signalsendeelemente 5 ausgesendete Lichtsignal zu einem Signalempfangselement 7 zurückreflektiert.

Vorzugsweise ist dies nur in einer bestimmten Stellung des Lagerelements 3 der Fall. Diese Stellung kann auch als erste Reflexionsstellung bezeichnet werden.

Nun wird das Lagerelement 3 und somit auch das Funktionselement 4 um die Pan-Achse 13 gedreht, und zwar so lange bis die erste Reflexionsstellung wieder erreicht ist. Insbesondere ist dies nach einer Drehung um die Pan-Achse 13 von 360°, also nach einer vollen Umdrehung der Fall. Die Drehbewegung wird nur in eine Richtung durchgeführt also beispielsweise im Uhrzeigersinn oder gegen den Uhrzeigersinn.

Während der Bewegung des Lagerelements 3 um die Pan-Achse 13 werden die Ticks, also die Ansteuersignale des Motors aufgezeichnet. Nach Erreichen der ersten Reflexionsstellung wird die benötigte Zahl der Ticks des Motors bestimmt.

Gemäß Gleichung 1 kann bestimmt werden, wie viele Ticks des Motors notwendig sind, um die Drehung des Lagerelements 3 um einen bestimmten Winkel zu bewirken.

$$T_{Pan,\,\alpha} = \alpha * T_{Pan,\,360} / 360 \qquad \text{(Gleichung 1)}$$

In Gleichung 1 bezeichnet $T_{Pan,\,\alpha}$ die Ticks des Motors für eine Drehung um den Winkel $\alpha$ um die Pan-Achse 13. Das Symbol $T_{Pan,\,360}$ bezeichnet die Zahl der Ticks des Motors für eine Drehung im Winkel von 360° und $\alpha$ einen gewünschten Drehwinkel um die Pan-Achse 13. Der Wert von $T_{Pan,\,360}$ entspricht also der Anzahl der Ticks des Motors von der ersten Reflexionsstellung wieder bis zur ersten Reflexionsstellung bei Drehung um die Pan-Achse 13.

Nach Kalibrierung der Pan-Achse 13 kann die Kalibrierung der Tilt-Achse 14 durchgeführt werden. Hierzu wird das Funktionselement 4 relativ zum Lagerelement 3 in eine Stellung gebracht, in der das zweite Signalreflexionselement 10 das durch eines der Signalsendeelemente 5 ausgesendete Lichtsignal zu einem Signalempfangselement 7 zurückreflektiert. In diesem Ausführungsbeispiel ist dies eine horizontale Ausrichtung des Funktionselements 4. Diese Stellung kann als zweite Reflexionsstellung bezeichnet werden. Die zweite Reflexionsstellung ist in Fig. 2 dargestellt, sowie in Fig. 3 mit durchgezogenen Linien.

Nun wird das Funktionselement 4 entlang der Tilt-Achse 14 solange verschwenkt, bis das dritte Signalreflexionselement 11 das Signal des Signalsendeelements 5 auf das entsprechende Signalempfangselement 7 reflektiert. Diese Stellung kann als dritte Reflexionsstellung bezeichnet werden.

Der Winkel, der zwischen der zweiten Reflexionsstellung und der dritten Reflexionsstellung liegt, ist bekannt. In diesem Ausführungsbeispiel beträgt der Winkel 90°. Analog zur Pan-Achse 13 kann nun auch für die Tilt-Achse 14 die Korrelationsfunktion zwischen der Motorbewegung und der tatsächlichen Bewegung des Funktionselements 4 ermittelt werden. Dadurch kann gemäß Gleichung 2 berechnet werden, wie viele Ticks des Motors notwendig sind, um die Schwenkung des Funktionselements 4 um einen bestimmten Winkel zu erreichen.

$$T_{Tilt,\,\beta} = \beta * T_{Tilt,\,90} / 90 \qquad \text{(Gleichung 2)}$$

In Gleichung 1 bezeichnen $T_{Tilt,\,\beta}$ die Zahl der Ticks des Motors für eine Drehung um den Winkel $\beta$ um die Tilt-Achse 14, $T_{Tilt,\,90}$ die Zahl der Ticks des Motors für eine Drehung im Winkel von 90°, also von der zweiten Reflexionsstellung in die dritte Reflexionsstellung und $\beta$ einen gewünschten Schwenkwinkel um die Tilt-Achse 14.

Die Kalibrierung der Achsen 13, 14 kann gegebenenfalls in unterschiedlicher Reihenfolge stattfinden, auch eine gleichzeitige Kalibrierung beider Achsen 13, 14 ist möglich.

Soll das Funktionselement 4 nun auf eine bestimmte Position gerichtet werden, müssen lediglich die Werte der gewünschten Winkel $\alpha$ und $\beta$ an die Steuereinheit der bühnentechnischen Vorrichtung 1 übermittelt werden. Über die beiden oben beschriebenen Korrelationsfunktionen kann dann die notwendige Anzahl der Ticks in der Tilt- und Pan-Achse berechnet werden.

**Bezugszeichenliste**

1 bühnentechnische Vorrichtung
2 Befestigungselement
3 Lagerelement
4 Funktionselement
5 Signalsendeelement
6 Signalreflexionselement
7 Signalempfangselement
8 Sende-Empfangs-Vorrichtung
9 Erstes Signalreflexionselement
10 Zweites Signalreflexionselement
11 Drittes Signalreflexionselement
12 Ausbreitungsrichtung
13 Pan-Achse
14 Tilt-Achse
15 Halteelement
16 Längsachse

**Patentansprüche**

1. Bühnentechnische Vorrichtung (1) umfassend ein Befestigungselement (2), ein Lagerelement (3), und ein Funktionselement (4), insbesondere eine Kamera oder einen Scheinwerfer, wobei das Funktionselement (4) am Lagerelement (3) um eine Tilt-Achse (14) schwenkbar angeordnet ist und das Lagerelement (3) am Befestigungselement (2) um eine Pan-Achse (13) drehbar angeordnet ist,

wobei eine Positionsbestimmungsanordnung vorgesehen ist, die derart ausgeführt ist, dass eine Relativbewegung zwischen Lagerelement (3) und Befestigungselement (2) sowie zwischen Lagerelement (3) und Funktionselement (4) bestimmbar ist,
**dadurch gekennzeichnet, dass** die Positionsbestimmungsanordnung wenigstens zwei Signalsendeelemente (5), wenigstens zwei Signalreflexionselemente (6) und wenigstens zwei Signalempfangselemente (7) umfasst, wobei ein erstes Signalreflexionselement (9) am Befestigungselement (2) und ein zweites Signalreflexionselement (10) am Funktionselement (4) angeordnet ist.

2. Vorrichtung nach Anspruch 1, **dadurch gekennzeichnet, dass** die Signalsendeelemente (5) zur Aussendung von elektromagnetischer Strahlung, insbesondere von Infrarot-Strahlung, sichtbarer Lichtstrahlung oder UV-Strahlung ausgebildet sind.

3. Vorrichtung nach einem der Ansprüche 1 oder 2, dass die Signalsendeelemente (5) derart angeordnet sind, dass die von den Signalsendeelementen (5) ausgesendeten Signale zueinander im Wesentlichen orthogonale Ausbreitungsrichtungen (12) aufweisen, die vorzugsweise in Richtung der Pan-Achse (13) und der Tilt-Achse (14) verlaufen.

4. Vorrichtung nach einem der Ansprüche 1 bis 3, **dadurch gekennzeichnet, dass** ein drittes Signalreflexionselement (11) am Funktionselement (4) angeordnet ist.

5. Vorrichtung nach einem der Ansprüche 1 bis 4, **dadurch gekennzeichnet, dass** eine Sende-Empfangs-Vorrichtung (8) vorgesehen ist, wobei die Sende-Empfangs-Vorrichtung (8) wenigstens zwei Signalsendeelemente (5) und wenigstens zwei Signalempfangselemente (7) umfasst.

6. Vorrichtung nach Anspruch 5, **dadurch gekennzeichnet, dass** die Sende-Empfangs-Vorrichtung (8) am Lagerelement (3) angeordnet ist und

   a. ein erstes Signalsendeelement (5) und ein zugeordnetes erstes Signalempfangselement (7) zur Zusammenwirkung mit dem ersten Signalreflexionselement (9) am Befestigungselement (2), sowie
   b. ein zweites Signalsendeelement (5) und ein zugeordnetes zweites Signalempfangselement (7) zur Zusammenwirkung mit dem zweiten Signalreflexionselement (10) am Funktionselement (4) umfasst.

7. Vorrichtung nach einem der Ansprüche 1 bis 6, **dadurch gekennzeichnet, dass**

   a. das Lagerelement (3) gegenüber dem Befestigungselement (2) ausschließlich in der Pan-Achse (13) beweglich ist, und
   b. das Funktionselement (4) gegenüber dem Lagerelement (3) ausschließlich in der Tilt-Achse (14) beweglich ist.

8. Verfahren zur Bestimmung der Korrelationsfunktion vorgegebener Tilt- und Pan-Werte eines Funktionselements (4), insbesondere einer Kamera oder eines Scheinwerfers, auf absolute Bewegungswerte des Funktionselements (4) unter Verwendung einer Vorrichtung (1) nach einem der Ansprüche 1 bis 7, umfassend die Schritte:

   a. Bewegen des Funktionselements (4) in eine erste Stellung, wobei in der ersten Stellung das Signal wenigstens eines Signalsendeelements (5) von wenigstens einem Signalreflexionselement (6) auf wenigstens ein Signalempfangselement (7) reflektiert wird,
   b. Bewegen des Funktionselements (4) durch Drehen um die Pan-Achse (13) und/oder durch Schwenken um die Tilt-Achse (14) in eine durch vorgegebene Tilt- und Pan-Werte definierte zweite Stellung, wobei in der zweiten Stellung das Signal wenigstens eines Signalsendeelements (5) von wenigstens einem Signalreflexionselement (6) auf wenigstens ein Signalempfangselement (7) reflektiert wird,
   c. Messen wenigstens eines absoluten Bewegungswertes des Funktionselements (4) zwischen der ersten Stellung und der zweiten Stellung,
   d. Bestimmen einer Korrelationsfunktion zwischen den vorgegebenen Tilt- und Pan-Werten des Funktionselements (4) und dem tatsächlich gemessenen Bewegungswert des Funktionselements (4).

9. Verfahren nach Anspruch 8, **dadurch gekennzeichnet, dass** die erste Stellung der zweiten Stellung entspricht.

10. Verfahren nach Anspruch 8 oder 9, **dadurch gekennzeichnet, dass** zur Bestimmung des absoluten Bewegungswertes in der Pan-Achse (13) eine Drehung des Funktionselements (4) um die Pan-Achse (13) um insbesondere 360° erfolgt.

11. Verfahren nach einem der Ansprüche 8 bis 10, **dadurch gekennzeichnet, dass** zur Bestimmung des absoluten Bewegungswertes in der Tilt-Achse eine Schwenkung des Funktionselements (4) um die Tilt-Achse (14) um insbesondere 90° erfolgt.

**Claims**

1. A technical stage device (1), comprising a fastening element (2), a bearing element (3) and a functional element (4), in particular a camera or a spotlight, wherein the functional element (4) is arranged on the bearing element (3) so as to be pivotable about a tilt axis (14) and wherein the bearing element (3) is arranged on the fastening element (2) so as to be rotatable about a pan axis (13), wherein a position determination arrangement is provided, which is designed in such a way that a relative movement between the bearing element (3) and the fastening element (2)

7

as well as between the bearing element (3) and the functional element (4) can be determined, **characterised in that** the position determination arrangement comprises at least two signal transmitting elements (5), at least two signal reflecting elements (6), and at least two signal receiving elements (7), wherein a first signal reflecting element (9) is arranged on the fastening element (2) and a second signal reflecting element (10) is arranged on the functional element (4).

2. The device according to claim 1, **characterised in that** the signal transmitting elements (5) are designed to transmit electromagnetic radiation, in particular infrared radiation, visible light radiation or UV radiation.

3. The device according to one of claims 1 or 2, **characterised in that** the signal transmitting elements (5) are arranged in such a way that the signals transmitted by the signal transmitting elements (5) have substantially orthogonal directions of extension (12) to one another, which preferably extend in the direction of the pan axis (13) and the tilt axis (14).

4. The device according to one of claims 1 to 3, **characterised in that** a third signal reflecting element (11) is arranged on the functional element (4).

5. The device according to one of claims 1 to 4, **characterised in that** a transceiver apparatus (8) is provided, wherein the transceiver apparatus (8) comprises at least two signal transmitting elements (5) and at least two signal receiving elements (7).

6. The device according to claim 5, **characterised in that** the transceiver apparatus (8) is arranged on the bearing element (3) and comprises

   a. a first signal transmitting element (5) and an associated first signal receiving element (7) for cooperating with a first signal reflecting element (9) on the fastening element (2) and
   b. a second signal transmitting element (5) and an associated second signal receiving element (7) for cooperating with a second signal reflecting element (10) on the functional element (4).

7. The device according to one of claims 1 to 6, **characterised in that**

   a. the bearing element (3) is movable relative to the fastening element (2) exclusively in the pan axis (13) and
   b. the functional element (4) is movable relative to the bearing element (3) exclusively in the tilt axis (14).

8. A method for determining the correlation function of predetermined tilt and pan values of a functional element (4), in particular a camera or a spotlight, to absolute motion values of the functional element (4) by using a device (1) according to one of claims 1 to 7, comprising the following steps:

   a. moving the functional element (4) into a first position, wherein, in the first position, the signal of at least one signal transmitting element (5) is reflected by at least one signal reflecting element (6) to at least one signal receiving element (7),
   b. moving the functional element (4) by rotating it about the pan axis (13) and/or pivoting it about the tilt axis (14) into a second position defined by predetermined tilt and pan values, wherein, in the second position, the signal of at least one signal transmitting element (5) is reflected by at least one signal reflecting element (6) to at least one signal receiving element (7),
   c. measuring at least one absolute motion value of the functional element (4) between the first position and the second position,
   d. determining a correlation function between the predetermined tilt and pan values of the functional element (4) and the actually measured motion value of the functional element (4).

9. The method according to claim 8, **characterised in that** the first position corresponds to the second position.

10. The method according to claim 8 or 9, **characterised in that**, for determining the absolute motion value in the pan axis (13), a rotation of the functional element (4) about the pan axis (13), in particular by 360°, is performed.

11. The method according to one of claims 8 to 10, **characterised in that**, for determining the absolute motion value in the tilt axis, a pivoting of the functional element (4) about the tilt axis (14), in particular by 90°, is performed.

**Revendications**

1. Dispositif d'équipement scénique (1) comprenant un élément de fixation (2), un élément de palier (3) et un élément fonctionnel (4), en particulier une caméra ou un projecteur, l'élément fonctionnel (4) étant disposé sur l'élément de palier (3) de manière pivotante autour d'un axe Tilt (14) et l'élément de palier (3) étant disposé sur l'élément de fixation (2) de manière rotative autour d'un axe Pan (13), un agencement de détermination de position étant prévu, qui est réalisé de manière à ce qu'un mouvement relatif entre l'élément de palier (3) et l'élément de fixation (2) ainsi qu'entre l'élément de palier (3) et l'élément fonctionnel (4) puisse être déterminé, **caractérisé en ce que** l'agencement de détermination de position comprend au moins deux éléments d'émission de signal (5), au moins deux éléments de réflexion de signal (6) et au moins deux éléments de réception de signal (7), un premier élément de réflexion de signal (9) étant disposé sur l'élément de fixation (2) et un deuxième élément de réflexion de signal (10) étant disposé sur l'élément fonctionnel (4).

2. Dispositif selon la revendication 1, **caractérisé en ce que** les éléments d'émission de signal (5) sont formés pour émettre un rayonnement électromagnétique, en particulier un rayonnement infrarouge, un rayonnement lumineux visible ou un rayonnement UV.

3. Dispositif selon l'une des revendications 1 ou 2, en ce que les éléments d'émission de signal (5) sont disposés de manière à ce que les signaux émis par les éléments d'émission de signal (5) présentent des directions de propagation (12) sensiblement orthogonales entre elles, de préférence selon l'axe Pan (13) et l'axe Tilt (14).

4. Dispositif selon l'une des revendications 1 à 3, **caractérisé en ce qu'**un troisième élément de réflexion de signal (11) est disposé sur l'élément fonctionnel (4).

5. Dispositif selon l'une des revendications 1 à 4, **caractérisé en ce qu'**il est prévu un dispositif d'émission-réception (8), le dispositif émetteur-récepteur (8) comprenant au moins deux éléments d'émission de signaux (5) et au moins deux éléments de réception de signaux (7).

6. Dispositif selon la revendication 5, **caractérisé en ce que** le dispositif émetteur-récepteur (8) est disposé sur l'élément de palier (3) et comprenant

   a. un premier élément d'émission de signal (5) et un premier élément de réception de signal associé (7) pour coopérer avec le premier élément de réflexion de signal (9) sur l'élément de fixation (2), et
   b. un deuxième élément d'émission de signal (5) et un deuxième élément de réception de signal (7) associé pour coopérer avec le deuxième élément de réflexion de signal (10) sur l'élément fonctionnel (4).

7. Dispositif (1) selon l'une des revendications 1 à 6, **caractérisé en ce que**

   a. l'élément de palier (3) est mobile par rapport à l'élément de fixation (2) exclusivement dans l'axe Pan (13), et
   b. l'élément fonctionnel (4) est mobile par rapport à l'élément de palier (3) exclusivement dans l'axe Tilt (14).

8. Procédé de détermination de la fonction de corrélation de valeurs Tilt et Pan prédéterminées d'un élément fonctionnel (4), en particulier d'une caméra ou d'un projecteur, sur des valeurs de mouvement absolues de l'élément fonctionnel (4), en utilisant un dispositif (1) selon l'une des revendications 1 à 7, comprenant les étapes :

   a. déplacement de l'élément fonctionnel (4) dans une première position, dans lequel, dans la première position, le signal d'au moins un élément d'émission de signal (5) est réfléchi par au moins un élément de réflexion de signal (6) sur au moins un élément de réception de signal (7),
   b. déplacement de l'élément fonctionnel (4) par rotation autour de l'axe Pan (13) et/ou par pivotement autour de l'axe Tilt (14) dans une deuxième position définie par des valeurs Tilt et Pan prédéterminées, le signal d'au moins un élément d'émission de signal (5) étant réfléchi dans la deuxième position par au moins un élément de réflexion de signal (6) sur au moins un élément de réception de signal (7),
   c. mesure d'au moins une valeur de mouvement absolue de l'élément fonctionnel (4) entre la première position et la deuxième position,
   d. détermination d'une fonction de corrélation entre les valeurs Tilt et Pan prédéterminées de l'élément fonctionnel (4) et la valeur de mouvement réellement mesurée de l'élément fonctionnel (4).

9. Procédé selon la revendication 8, **caractérisé en ce que** la première position correspond à la deuxième position.

**10.** Procédé selon la revendication 8 ou 9, **caractérisé en ce que** pour déterminer la valeur absolue du mouvement dans l'axe Pan (13), une rotation de l'élément fonctionnel (4) autour de l'axe Pan (13), en particulier de 360°, est effectué.

**11.** Procédé selon l'une des revendications 8 à 10, **caractérisé en ce que** pour déterminer la valeur absolue du mouvement dans l'axe Tilt, un pivotement de l'élément fonctionnel (4) autour de l'axe Tilt (14), en particulier de 90°, est effectué.

Fig.2

Fig.1

Fig.3

Fig.4

EP 3 914 963 B1

**EP 3 914 963 B1**

## IN DER BESCHREIBUNG AUFGEFÜHRTE DOKUMENTE

**In der Beschreibung aufgeführte Patentdokumente**

• US 8300219 B1